(19) Europäisches Patentamt
European Patent Office
Office européen des brevets

(11) **EP 4 073 603 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **21708160.3**

(22) Anmeldetag: **19.02.2021**

(51) Internationale Patentklassifikation (IPC):
***G05B 19/409*** *(2006.01)*

(52) Gemeinsame Patentklassifikation (CPC):
**G05B 19/409;** G05B 2219/23065; G05B 2219/33007; G05B 2219/36529; G05B 2219/36534; Y02P 90/02

(86) Internationale Anmeldenummer:
**PCT/EP2021/054108**

(87) Internationale Veröffentlichungsnummer:
**WO 2021/197708 (07.10.2021 Gazette 2021/40)**

# (54) OPTIMIERUNG VON ZERSPANUNGSVORGÄNGEN AUF WERKZEUGMASCHINEN

OPTIMISATION OF MACHINING OPERATIONS ON MACHINE TOOLS

OPTIMISATION DES PROCESSUS D'USINAGE PAR ENLÈVEMENT DE COPEAUX SUR LES MACHINE-OUTILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2020 EP 20167182**

(43) Veröffentlichungstag der Anmeldung:
**19.10.2022 Patentblatt 2022/42**

(73) Patentinhaber: **Siemens Aktiengesellschaft 80333 München (DE)**

(72) Erfinder:
- **DEWALD, Mario 47279 Duisburg (DE)**
- **EBBEN, Alexander 45359 Essen (DE)**
- **WULLENKORD, Timo 47057 Duisburg (DE)**

(74) Vertreter: **Siemens Patent Attorneys Postfach 22 16 34 80506 München (DE)**

(56) Entgegenhaltungen:
**DE-A1-102009 023 648 US-A1- 2017 212 488 US-A1- 2019 018 391**

- **Mike Lynch: "Monitoring Important Control Panel Functions", , 17. Januar 2011 (2011-01-17), Seiten 1-1, XP055733687, Gefunden im Internet: URL:https://www.mmsonline.com/columns/mon i toring-important-control-panel-functions [gefunden am 2020-09-24]**
- **LOENZO R A G ET AL: "An object-oriented architecture for sensorless cutting force feedback for CNC milling process monitoring and control", ADVANCES IN ENGINEERING SOFTWARE, ELSEVIER SCIENCE, OXFORD, GB, Bd. 41, Nr. 5, 1. Mai 2010 (2010-05-01), Seiten 754-761, XP026925736, ISSN: 0965-9978, DOI: 10.1016/J.ADVENGSOFT.2009.12.016 [gefunden am 2010-02-25]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft ein Verfahren zum Betrieb eines Werkzeugmaschinensystems, umfassend eine Werkzeugmaschine zur Bearbeitung wenigstens eines Werkstücks mittels wenigstens eines Werkzeugs und eine mit der Werkzeugmaschine verbundene Steuervorrichtung zum Erzeugen einer Relativbewegung zwischen dem Werkstück und dem Werkzeug anhand eines von der Steuervorrichtung abarbeitbaren Programms.

Bei der Bearbeitung eines Werkstücks, z.B. im Werkzeug- und Formenbau, werden in aller Regel Bahnprogramme (auf CNC-Basis) zur Steuerung der jeweiligen Maschine, insbesondere Fräsmaschine, verwendet. Bahnprogramme (häufig auch als "Teileprogramme", "CNC-Programme", "Steuerprogramme" oder nur "Programme" bezeichnet) werden heutzutage hauptsächlich durch CAD/CAM/PP-Systeme generiert. Dabei wird der herzustellende Körper bzw. Gegenstand zunächst mit einem CAD-Programm (Computer Aided Design) entworfen und anschließend durch ein CAM-Programm (Computer Aided Manufacturing) in einen maschinenunabhängigen Code, der den Bearbeitungsablauf beschreibt, übersetzt. Ein Post-Prozessor (PP) übersetzt den maschinenunabhängigen Code in einen maschinenabhängigen Code, das sog. Bahnprogramm auf CNC-Basis, das zur Ansteuerung einer konkreten Maschine genutzt werden kann. Die Bearbeitung wird dabei in unterschiedliche Schritte unterteilt, z.B. in Schruppen, Vorschlichten und Schlichten.

Das in der oben beschriebenen Weise in dem CAD/CAM/PP-System entstandene Bahnprogramm wird dann auf die zur Bearbeitung des Werkstücks vorgesehene CNC-Steuerung der betreffenden Maschine aufgespielt und anschließend durch einen Maschinenbediener auf der Maschine mittels der CNC-Steuerung ausgeführt.

Das Bahnprogramm, welches in einer CNC-Programmiersprache (z.B. G-Code) erstellt worden sein kann, wird dabei vorab erstellt und zum Zeitpunkt der Abarbeitung durch die CNC-Steuerung nicht mehr modifiziert. Im Bahnprogramm vorab festgelegt sind dabei insbesondere die Bearbeitungstechnologie, die zu verwendenden Werkzeuge, die Technologieparameter (Spindeldrehzahl, Vorschubgeschwindigkeit, Schnittgeschwindigkeit etc.), die Maschinenfunktionen, die von dem jeweiligen Werkzeug abzufahrende Bahnkurve und die jeweilige Werkzeug-Orientierung. Die im Bahnprogramm festgelegten Werte werden von der CNC-Steuerung in aller Regel nicht hinterfragt.

Dem Bediener an der Maschine steht es jedoch in der Regel frei, durch die Betätigung entsprechender Bedienelemente an einer Bedienoberfläche der CNC-Steuerung bestimmte, durch das CNC-Programm vorgegebene Parameter der Bearbeitung zu ändern. Derartige vom Maschinenbediener beeinflussbare Technologieparameter sind insbesondere die Schnittgeschwindigkeit, die Vorschubgeschwindigkeit, die Eingriffstiefe oder die Eingriffsbreite des Werkzeugs.

Dem Bediener an der Maschine ist dabei in der Regel zum Zeitpunkt seines manuellen Eingriffs in die Bearbeitung nicht klar, wie sich die konkret vorgenommenen Parameteränderungen auf die Produktivität (das Verhältnis zwischen dem durch die Bearbeitung geschaffenen Mehrwert und den dafür aufgewendeten Ressourcen) auswirken.

Aus der Druckschrift Mike Lynch: "Monitoring Important Control Panel Functions", 17. Januar 2011, Seiten 1-1, XP055733687, werden einige Taster und Schalter einer CNC Maschinensteuertafel genannt, deren Funktionen einem Bediener einer CNC-Maschine bekannt sein sollten. Es wird ausgesagt, dass sich beispielsweise eine Veränderung des Vorschub-Overrides oder des Spindel-Overrides auf die Bearbeitungsgeschwindigkeit und somit auf eine für eine bestimmte Aufgabe benötigte Zeitdauer auswirken können.

Aus der Druckschrift US 2017/212488 A1 ist ein System zur Überwachung und Steuerung einer zentralen Anlage bekannt, das einen Optimierer auf hoher Ebene, einen Teilanlagenmonitor, eine Benutzeroberfläche und eine grafische Benutzeroberfläche (GUI) umfasst. Die zentrale Anlage umfasst mehrere Teilanlagen, die zur Versorgung mit Wärmeenergie oder als Kälteanlagen konfiguriert sind. Durch Interaktion eines Benutzers kann eine Zeitdauer für das Füllen eines Energiespeichers bestimmt und angezeigt werden.

Aus der Druckschrift DE 10 2009 023648 A1 ist bekannt, um ein Steuerungssystem für eine einen Arbeitsraum und in diesem angeordnete Bearbeitungseinheiten aufweisende Werkzeugmaschine umfassend eine Visualisierungssteuerung, welche basierend auf Betriebsdaten sowie basierend auf einem abgespeicherten Maschinenmodell auf einer Visualisierungseinheit die reale Werkzeugmaschine mindestens im Bereich ihres Arbeitsraums mittels Visualisierungselementen als virtuelle Werkzeugmaschine mit in einem virtuellen Arbeitsraum vorgesehenen virtuellen Bearbeitungseinheiten sowie deren Funktionen als virtuelle Funktionen darstellt, einfacher bedienbar zu gestalten, dass der Visualisierungseinheit eine Interaktionseinheit zugeordnet ist, welche eine manuelle Interaktion erlaubt, dass der Visualisierungseinheit eine Funktionswahleinheit zugeordnet ist, welche eine Zuordnung einer Funktion der Werkzeugmaschine zu dieser manuellen Interaktion erlaubt, und dass eine Funktionsdatengeneratoreinheit vorgesehen ist, welche der manuellen Interaktion unter Berücksichtigung der zugeordneten Funktion entsprechende Betriebsdaten erzeugt und diese Betriebsdaten der Visualisierungssteuerung zur Darstellung der durch die manuelle Interaktion vorgegebenen Funktion auf der Visualisierungseinheit mittels den Visualisierungselementen übermittelt.

Aus der Druckschrift US 2019/018391 A1 ist ein System bekannt, umfassend: einen oder mehrere Computer, die so programmiert sind, dass sie ein NC-Programm (Numerical Control) erzeugen, um ein Werkstück unter Verwendung einer CNC-Maschine (Computer Numerical Control) herzustellen und Ausgabedaten für die Herstellung des Werkstücks bereitzustellen. Die CNC-Maschine ist konfiguriert, um das NC-Programm auszuführen, um das Werkstück herzustellen und die Ausgabedaten bereitzustellen, die Anweisungen eines zusätzlichen Computerprogramms zu codieren, das auf der CNC-Maschine ausgeführt wird, und die Ausgabedaten zu analysiert, bevor die Herstellung des Werkstücks durch die CNC-Maschine gemäß den Anweisungen des NC-Programms abgeschlossen ist. Ferner wählt die CNC-Maschine einen Datensatz aus den analysierten Ausgabedaten basierend auf einem oder mehreren vorbestimmten Parametern aus und stellt den Datensatz einem Computer zur Verfügung, der von der CNC-Maschine entfernt ist, um die Bearbeitung mit der CNC-Maschine zu erleichtern. Dabei können auch Warnmeldungen oder Vorschläge für einen Vorschub-Override an einen Bediener ausgegeben werden.

Aus der Druckschrift LOENZO RAG ET AL: "An object-oriented architecture for sensorless cutting force feedback for CNC milling process monitoring and control", ADVANCES IN ENGINEERING SOFTWARE, ELSEVIER SCIENCE, OXFORD, GB, Bd. 41, Nr. 5, 1. Mai 201, Seiten 754-761, XP026925736, ISSN: 0965-9978, DOI: 10.1016/J.ADVENGSOFT.2009.12.016, ist ein Monitoring-System für einen CNC-Fräs-Prozess bekannt, das ein Feedback-Signal bezüglich einer Schneidkraft erzeugt. Es wird vorgeschlagen, dass die Schneidgeschwindigkeit so gewählt wird, dass damit ein Kompromiss zwischen minimalen Produktionskosten und maximaler Produktivität erreicht wird.

Aus der Druckschrift DE 10 2006 006 273 A1 ist ein System zur Ermittlung des Verschleißzustandes einer Werkzeugmaschine bekannt. Dieses weist eine Werkzeugmaschine mit einer Steuerung, einen Produktionssteuerungsrechner, eine Werkzeugdatenbank und einen mit der Steuerung der Werkzeugmaschine, dem Produktionssteuerungsrechner und der Werkzeugdatenbank jeweils über eine Datenverbindung verbundenen Simulationsrechner auf. Dieser ist dazu vorgesehen, unter Berücksichtigung realer Maschinen-, Fertigungs- und Werkzeugdaten der Werkzeugmaschine durch einen Simulationsvorgang den Verschleißzustand der Werkzeugmaschine beschreibende Daten zu ermitteln und über eine Datenverbindung einer Anzeigeeinheit oder einem weiteren Prozess zuzuführen.

Bei der Zerspanung werden nach dem Stand der Technik Optimierungen, die auf Werkzeugtechnologien beruhen, nur sequenziell durchgeführt. Das heißt, die Optimierung findet immer in Abhängigkeit von verfügbaren internen und externen Experten statt und ist daher planungs- und personaltechnisch aufwendig.

Noch dazu ist die tatsächliche Einführung und Implementierung neu aufgesetzter Prozesse oder Technologien extrem von der Disziplin der Mitarbeiter abhängig und von daher bei den entwickelnden Abteilungen (Fertigungstechnologie/ Industrial Engineering) mit enormem Aufwand zur Nachsorge verbunden.

Die Herausforderung dieses Sachverhaltes gründet auf der Tatsache, dass den im operativen Bereich tätigen Personen keinerlei Kenngrößen für die Wirksamkeit ihres eigenen Verhaltens gespiegelt werden.

Ein Zerspanungsprozess ist von einer Vielzahl von Sachverhalten abhängig. Insbesondere sind die Kosten eines konkreten Prozesses stark abhängig von der Reibpaarung (Schneidstoff/Werkstoff) und dem dadurch zu Tage tretenden Verschleißverhalten der Werkzeuge. Hierzu sind derzeit keine Produktivitätskenngrößen bekannt, die eine vergleichende Bewertung zulassen würden. Nur das sogenannte Zeitspanvolumen wird immer wieder zur Beurteilung der Produktivität herangezogen.

Aufgabe der vorliegenden Erfindung ist es, dem MaschinenBediener eine Rückmeldung zu geben, wie sich die von ihm an der Maschine vorgenommenen manuellen Änderungen von Bearbeitungsparametern auf die Produktivität auswirken.

Diese Aufgabe wird durch das Verfahren laut Anspruch 1 gelöst.

Ferner wird diese Aufgabe durch ein entsprechendes Werkzeugmaschinensystem bzw. eine entsprechende Steuervorrichtung zur Ausführung eines derartigen Verfahrens gelöst.

Das Werkzeugmaschinensystem zur Durchführung des erfindungsgemäßen Verfahrens umfasst wenigstens eine Werkzeugmaschine zur Bearbeitung wenigstens eines Werkstücks mittels wenigstens eines Werkzeugs. Bei der Bearbeitung handelt es sich vorzugsweise um eine spanabhebende bzw. spanende Bearbeitung, wie z.B. eine Fräs-Bearbeitung. Die Erfindung ist jedoch nicht auf letztere beschränkt, so dass auch oberflächenbehandelnde Bearbeitungen (Schleifen, Polieren etc.) oder auch additive Fertigungsverfahren (z.B. 3D-Druck) davon umfasst sind. Ebenso ist der Begriff "Werkzeugmaschine" im Zusammenhang mit der Erfindung breit zu interpretieren, so dass darunter auch additive Fertigungsmaschinen oder in der Fertigung verwendete Roboter zu verstehen sind. Die Bearbeitung selbst kann ein einzelnes Werkstück betreffen. Sie kann aber auch eine Vielzahl an Werkstücken, insbesondere ein Los an Werkstücken, also eine Serie an Werkstücken, die in gleicher Weise bearbeitet werden, betreffen.

Mit der Werkzeugmaschine verbunden ist eine Steuervorrichtung, insbesondere eine CNC-Steuerung, die ein Programm, auch als Teileprogramm, Bahnprogramm, Steuerprogramm etc. bezeichnet, abarbeitet. Durch das Programm sind insbesondere die durch das Werkzeug relativ zu dem Werkstück ausgeführten Bewegungsbahnen bestimmt.

Die Steuervorrichtung umfasst ihrerseits eine Bedieneinrichtung mit einer Anzeigevorrichtung zur Interaktion eines Bedieners mit der Steuervorrichtung und insbesondere zur manuellen Einstellung bzw. Veränderung von Parametern der Bearbeitung. Insbesondere lassen sich durch manuelle Interaktion Technologieparameter wie Spindeldrehzahl, Vorschubgeschwindigkeit, Schnittgeschwindigkeit, Eingriffstiefe oder Eingriffsbreite gegenüber den diesbezüglichen Vorgaben verändern. Insbesondere kann in sehr einfacher Weise durch Drehen an dem bei CNC-Steuerungen üblichen Override-Regler direkt die Vorschubgeschwindigkeit in einem Bereich zwischen 0 und 120% vom vorgegebenen Wert variiert werden.

Die Technologieparameter werden üblicherweise durch das Steuerprogramm festgelegt. Sie sind abhängig von der Auszuführenden Bearbeitung und der dafür vorgesehenen, konkreten Werkzeugmaschine. Sie können jedoch zumindest zum Teil auch durch die jeweilige Werkzeugmaschine vorgegeben und in der Steuerung hinterlegt sein. Insbesondere für die Spindeldrehzahl ist dies häufig der Fall.

Die Erfindung sieht vor, dass infolge wenigstens einer manuellen Veränderung eines Technologieparameters durch den Bediener ein Maß für eine durch die Veränderung hervorgerufene Änderung einer produktionswirtschaftlichen Kenngröße, insbesondere ein Maß für eine durch die Veränderung hervorgerufene Änderung einer für die Bearbeitung erforderlichen Bearbeitungszeit und/oder ein Maß für eine durch die Veränderung hervorgerufene Änderung von durch die Bearbeitung verursachten Bearbeitungskosten bestimmt und jeweils direkt und/oder in Relation zu einem diesbezüglichen Relativmaß an der Anzeigevorrichtung angezeigt wird. Die Erfindung sieht insbesondere vor, dass zur Bestimmung der Änderung der produktionswirtschaftlichen Kenngröße, insbesondere der Bearbeitungszeit, nicht nur die reine Zerspanzeit bzw. Hauptnutzungszeit erfasst wird, bei der sich insbesondere das Werkzeug in Kontakt mit dem Werkstück befindet, sondern auch die sog. Nebenzeiten, die z.B. für einen Werkzeugwechsel anfallen. Die Bearbeitungszeit ist somit die Summe aus Hauptnutzungszeit und Nebenzeiten.

Vorteilhaft wird die Änderung der Bearbeitungszeit in Stunden, Minuten und Sekunden angegeben. Es sind jedoch auch andere Darstellungsformen denkbar, z.B. in Form von Balken einer zu der Änderung korrespondierenden Länge bzw. Höhe. Auch eine Angabe in % in Bezug zu einem Relativmaß ist möglich.

Analog zu der Bearbeitungszeit kann dem Bediener als Maß für eine durch die Veränderung hervorgerufene Änderung einer produktionswirtschaftlichen Kenngröße auch ein Maß bzgl. einer Änderung der Bearbeitungskosten angezeigt werden. Auch diese können absolut, z.B. in Form eines Betrages in einer bestimmten Währung, oder relativ zu einem Relativmaß angezeigt werden. Auch eine Angabe, wie sich die Parameteränderung auf die Stückkosten auswirkt, ist eine mögliche Variante der Erfindung.

Das Relativmaß kann aus einem Optimum der Auszuführenden Bearbeitung hervorgehen, es kann sich aber auch auf die bei der vorausgehenden Bearbeitung erreichten Werte, auf Durchschnittswerte etc. beziehen. Bei dem Optimum wiederum kann es sich um theoretisches Optimum handeln, dass beispielsweise in einer Simulation ermittelt wurde, oder um ein bei einer vergleichbaren, realen Bearbeitung ermitteltes Optimum.

Die Ermittlung der Änderung der Bearbeitungszeit erfolgt vorzugsweise auf Basis der Standzeit des Werkzeugs, der Reibpaarung und der für einen Werkzeugwechsel jeweils benötigten Zeit. Die Standzeit des Werkzeugs, also die Zeitdauer, in der sich das Werkzeug zur Bearbeitung des Werkstücks in Kontakt (Eingriff) mit dem Werkstück befindet, ist ihrerseits in der Regel abhängig von der Vorschubgeschwindigkeit, der Spindeldrehzahl und der Reibpaarung. Die Reibpaarung gibt an, welcher Schneidstoff - also das Material der Schneiden des Werkzeugs - auf welchen Werkstoff - also das Material an der jeweils zu bearbeitenden Stelle des Werkstücks - trifft.

Die Ermittlung der Änderung der Bearbeitungskosten erfolgt vorzugsweise auf Basis der Kosten für die Maschinenzeit ("Maschinenstundensatz") sowie der Werkzeugkosten.

Die Erfindung bietet den Vorteil, dass der Bediener an der Maschine, der durch manuelle Interaktion mittels der Bedieneinrichtung wenigstens einen Technologieparameter verändert, sofort eine Rückmeldung hinsichtlich der Auswirkungen seines Handelns in Bezug auf eine produktionswirtschaftliche Kenngröße, insbesondere die Bearbeitungszeit und/oder die Bearbeitungskosten, erhält. Der Bediener bekommt dadurch sofort eine Rückmeldung bezüglich der Auswirkungen seines Handelns. Insbesondere kann der Bediener so sofort erkennen, ob sich durch sein Handeln die von ihm beabsichtigte Wirkung erzielen lässt.

Setzt der Bediener beispielsweise die Vorschubgeschwindigkeit durch Betätigung des Override-Reglers von 100% auf 120%, so verbirgt sich häufig dahinter die Erwartungshaltung, dass die Bearbeitung schneller ausgeführt wird und sich dadurch die Bearbeitungszeit entsprechend verkürzt. Durch die erhöhte Vorschubgeschwindigkeit wird sich jedoch auch der WerkzeugVerschleiß erhöhen bzw. die Standzeit des Werkzeugs, also die Zeit, für die das Werkzeug die vorgesehene Bearbeitung innerhalb der vorgegebenen Verschleißgrenzen ausführen kann, verringern. Eventuell werden dadurch für die auszuführende Bearbeitung mehr Werkezeuge benötigt als ursprünglich einkalkuliert. Dadurch bedingte zusätzliche Werkzeugwechsel können dazu führen, dass die Verringerung der Bearbeitungszeit wesentlich geringer ausfällt als ursprünglich gedacht, ja dass sich im ungünstigsten Fall die Bearbeitungszeit (einschließlich der Nebenzeiten) sogar erhöht. Auch wirkt sich der zusätzliche Werkzeugbedarf negativ auf die durch die Bearbeitung verursachten Bearbeitungskosten aus. Durch die Erfindung erkennt der Bediener an der Maschine sofort, dass sich mit dem von ihm durchgeführten manuellen Eingriff eventuell ein gewünschter Effekt nicht erzielen lässt. Er hat dadurch die Möglichkeit, den manuellen Eingriff zu überdenken und gegebenenfalls nicht auszuführen.

Die Vorteile der Erfindung zeigen sich insbesondere dann, wenn sehr arbeitsintensive Werkstücke, z.B. Impeller, gefräst oder Werkstücke mit hohen Losgrößen gefertigt werden. Bei derartigen Bearbeitungen kommt es häufig zu einem hohen Werkzeugverschleiß und dadurch bedingte häufige Werkzeugwechsel. Da in die Bearbeitungszeit auch Nebenzeiten, z.B. für Werkzeugwechsel, mit einbezogen sind, unterliegen derartige Bearbeitungen einer hohen Bearbeitungszeit. Die Änderung eines Technologieparameters an der Maschine kann somit signifikante Auswirkungen auf die Anzahl benötigter Werkzeuge haben, wodurch sich die Bearbeitungszeit - und infolgedessen die Bearbeitungskosten - in erheblichem Maße ändern können.

So ist es bei derart bearbeitungsintensiven Bearbeitungen für den Bediener an der Maschine besonders wichtig, sofort eine Rückmeldung darüber zu erhalten, wie sich manuelle Eingriffe in die Bearbeitung hinsichtlich produktionswirtschaftlicher Kenngrößen wie der Bearbeitungszeit oder der Bearbeitungskosten auswirken.

Vorteilhaft wird im Zusammenhang mit der Erfindung das Maß der Änderung der jeweiligen produktionswirtschaftlichen Kenngröße durch die Steuervorrichtung an der Maschine bestimmt.

Daneben ist es jedoch auch möglich, derartige Berechnungen an einer bezüglich der Steuervorrichtung externen Recheneinrichtung, beispielsweise einem Edge-Computer, einem CAM-System oder in der Cloud zu ermitteln. Diese Möglichkeiten bieten gegenüber der Berechnung auf der Steuervorrichtung den Vorteil, dass die Steuervorrichtung dadurch nicht mit zusätzlichem Rechenaufwand beaufschlagt wird.

Bei einer bevorzugten Ausführungsform der Erfindung werden die durch die manuelle Interaktion des Bedieners veränderten Technologieparameter nicht sofort in der Steuervorrichtung umgesetzt. Das heißt, die Steuervorrichtung arbeitet zunächst auf Basis der zuvor eingestellten Parameter weiter. Vorzugsweise wirkt sich die Veränderung zunächst nur in einer Simulation der Bearbeitung mit dem veränderten Parameter aus. Die Bestimmung der Änderung der produktionswirtschaftlichen Kenngröße erfolgt vorteilhaft zunächst ebenfalls lediglich auf Basis der Simulation. Der Bediener erhält dadurch die Möglichkeit, dass er zunächst die Auswirkungen der Parameter-Änderungen angezeigt bekommt, bevor diese auch tatsächlich die konkret ausgeführte, reale Bearbeitung verändern. Erst wenn sich der Bediener über die von ihm verursachten Auswirkungen in Bezug auf die konkrete Bearbeitung im Klaren ist, wird die Parameter-Änderung auch umgesetzt. Hierfür ist vorzugsweise eine erneute manuelle Interaktion des Benutzers mit der Bedieneinrichtung, z.B. ein Druck auf einen Bestätigungs-Button, erforderlich. Parameter-Änderungen, die sich in nicht beabsichtigter Weise negativ auf die Produktivität auswirken würden, können dadurch rechtzeitig verhindert werden.

Bei einer bevorzugten Ausführungsform der Erfindung sind in der Steuervorrichtung bzw. der externen Recheneinrichtung eine für den Werkzeugwechsel vorgesehene Werkzeugwechselzeit, für die Beschaffung eines Werkzeugs benötigte Werkzeugkosten oder ein für den Betrieb der Werkzeugmaschine bestimmter Maschinenstundensatz hinterlegt. Vorteilhaft wird das Maß für die Änderung der produktionswirtschaftlichen Kenngröße dann in Abhängigkeit der Werkzeugwechselzeit, der Werkzeugkosten oder des Maschinenstundensatzes ermittelt.

Durch die Erfassung der Werkzeugwechselzeit, der Werkzeugkosten und des Maschinenstundensatzes werden die Größen mit dem größten Einfluss auf die Bearbeitungszeit bzw. die Bearbeitungskosten in die Berechnung der diesbezüglichen Änderungen einbezogen. Die betreffenden Änderungen können insbesondere auf Basis dieser Größen hinlänglich genau bestimmt werden.

Die entsprechenden Größen lassen sich vorteilhaft durch Interaktion des Benutzers mit der Steuervorrichtung bzw. der externen Recheneinrichtung einstellen. Dadurch ist es möglich, die entsprechenden Größen in einfacher Weise in das System einzugeben und stets aktuell zu halten.

Die für einen Werkzeugwechsel benötigte Werkzeugwechselzeit ist ebenfalls von einer Vielzahl von Parametern abhängig. Beispielsweise können die Größe des Werkzeugs, der Magazinplatz oder die Größe des betreffenden Werkzeug-Magazins die Werkzeugwechselzeit beeinflussen. Daher ist es besonders vorteilhaft, wenn die Werkzeugwechselzeit während des realen Betriebs der Maschine gemessen und vorzugsweise fortlaufend aktualisiert wird. Dadurch ist die Werkzeugwechselzeit stets aktuell und ein manueller Eingriff des Benutzers ist für die Aktualisierung nicht erforderlich.

Vorteilhaft wird die produktionswirtschaftliche Kenngröße, insbesondere die Bearbeitungszeit oder die Bearbeitungskosten, bzw. deren Änderung, in Abhängigkeit von während des Betriebs des Werkzeugmaschinensystems erzeugten Messwerten ermittelt. Diese Messwerte betreffen insbesondere die tatsächlich bei der Bearbeitung erreichten Standzeiten der Werkzeuge oder die tatsächlich für einen Werkzeugwechsel benötigte Werkzeugwechselzeit.

Bei den Technologieparametern, die manuell durch den Bediener veränderbar sind und bei denen die Auswirkung der manuellen Veränderung dem Bediener erfindungsgemäß angezeigt wird, handelt es sich insbesondere um die Vorschubgeschwindigkeit sowie die Spindeldrehzahl. Erfahrungsgemäß werden diese beiden Technologieparameter am häufigsten manuell durch Benutzer an der Maschine verändert. So ist es vorteilhaft, wenn besonders bei diesen Technologieparametern dem Benutzer die Auswirkung einer Veränderung unmittelbar vor Augen geführt wird. Die Erfindung ist jedoch nicht auf diese beiden Technologieparameter beschränkt, sondern kann auch andere bzw. zusätzliche Technologieparameter betreffen.

Wichtig im Zusammenhang mit der Erfindung ist, dass dem Bediener nicht lediglich der Absolutwert der produktionswirtschaftlichen Kenngröße wie der Bearbeitungszeit bzw. der Bearbeitungskosten angezeigt wird, da ihm daraus nicht unmittelbar die Auswirkungen seines manuellen Eingriffs ersichtlich sind. Viel wichtiger für den Benutzer ist es zu erkennen, wie sich die betreffende produktionswirtschaftliche Kenngröße durch sein Eingreifen verändert.

Vorteilhaft erfolgt die Angabe in Bezug zu einem Relativmaß. Vorzugsweise handelt es sich bei dem Relativmaß um ein Optimum, beispielsweise der für die Bearbeitung erforderlichen Bearbeitungszeit bzw. der durch die Bearbeitung verursachten Bearbeitungskosten. Bei dem Optimum kann es sich um ein theoretisches Optimum handeln, welches beispielsweise in einer Simulation des Bearbeitungsvorgangs, insbesondere mittels eines CAM-Systems ermittelt wurde.

Bei dem Optimum kann sich jedoch beispielsweise auch um einen bereits an der konkreten Maschine bei einer realen, vorherigen Bearbeitung erreichten Wert handeln. Durch die Relation zu einem Relativmaß, insbesondere einem Optimum, erkennt der Benutzer sofort, wie stark sich der manuelle Eingriff jeweils die laufende Bearbeitung auswirkt bzw. auswirken würde.

Die Abhängigkeit zwischen der Bearbeitungsdauer bzw. dem Zeitspanvolumen von der Vorschubgeschwindigkeit, der Eingriffstiefe sowie der Eingriffsbreite soll nachfolgend beispielhaft an der Zerspanung einer Kammer eines Impellers gezeigt werden.

Die Bearbeitung erfolgt mit einem konkreten Fräser eines bestimmten Herstellers, der in für die Bearbeitung erforderlicher Anzahl in einem Werkzeugmagazin der betreffenden Maschine vorhanden ist.

Für die beispielhafte Zerspanung einer Kammer eines Impellers mit dem bestimmten Fräser sollen folgende Vorgaben bzw. Spezifikationen gelten:

| | |
|---|---|
| Schnittgeschwindigkeit | $v_c$ = 180 m/min |
| Durchmesser | d = 66 mm |
| Zähnezahl | Z = 4 |
| Vorschubgeschwindigkeit | $v_f$ = 4000 mm/min |
| Eingriffstiefe | $a_p$ = 0,7 mm |
| Eingriffsbreite | $a_e$ = 30 mm |
| Werkzeugwechselzeit | t = 2 min |
| Bearbeitungsvolumen | V = 40000 $cm^3$ |

Unter diesen Annahmen lassen sich nun mit der weiteren Annahme, dass keine Werkzeugwechsel erforderlich sind, folgende Größen ableiten:

| | |
|---|---|
| Bearbeitungslänge | $l_f = V / (a_p + a_e) = 1905$ m |
| Bearbeitungsdauer | $d_t = l_f * 1000 / v_f = 476$ min |
| Zeitspanvolumen | $Q = V / dt = 84$ cm3 / min |

Die Zeit für einen Werkzeugwechsel hängt ab von der jeweiligen Maschine, insbesondere dem verwendeten Werkzeugmagazin und der Werkzeugwechselvorrichtung. Sie kann von Maschine zu Maschine stark variieren und auch bei ein und derselben Maschine Schwankungen unterworfen sein. Diese Schwankungen können sich beispielsweise aus unterschiedlichen Magazinplätzen ergeben oder von der jeweiligen Position des Werkzeugs relativ zum Werkstück abhängen, aus der der betreffende Werkzeugwechsel durchgeführt werden muss.

Geht man nun von folgenden, realen Bedingungen aus, die insbesondere auf Messwerten beruhen:

| | |
|---|---|
| Standzeit | T = 20 min |
| Werkzeugwechselzeit | t = 2 min |

so lassen sich folgenden Größen berechnen:

| | |
|---|---|
| Anzahl Werkzeugwechsel | $A = dt / T = 24$ |
| Basiszeitspanvolumen | $Q_{basis} = V/(dt + (t * A)) = 76$ cm3/min |

In dem konkreten Beispiel ergibt sich somit bei einer (durchschnittlichen) Werkzeugwechselzeit von 2 min und einer (durchschnittlichen) Standzeit des Werkzeugs von 20 min ein real erreichbares Basiszeitspanvolumen $Q_{basis}$ von ca. 76 $cm^3$/min.

Die nachfolgenden Tabellen sollen veranschaulichen, wie sich Veränderungen der Parameter Vorschubgeschwindigkeit, Eingriffstiefe oder Eingriffsbreite auf das Zeitspanvolumen bzw. das Basiszeitspanvolumen auswirken. Dabei gibt das Zeitspanvolumen das Volumen pro Zeit an, das ohne Berücksichtigung von Werkzeugwechseln zerspant wird, wohingegen bei der Angabe des Basiszeitspanvolumens die Werkzeugwechselzeiten mit berücksichtigt sind. Insbesondere wirkt sich jede Parameter-Änderung auf die Standzeit des Werkzeugs aus, so dass sich ggf. die Anzahl der benötigten Werkzeugwechsel ändert. Insgesamt resultiert so in Anbetracht der oben gezeigten Zusammenhänge das aus den Tabellen ersichtliche Basiszeitspanvolumen.

| Vorschub-geschwin-digkeit | Bearbei-tungs-dauer | Zeitspan-volumen | Stand-zeit | Werkzeug-wechsel | Basiszeit-span-volumen |
|---|---|---|---|---|---|
| $v_f$ | d | Q | t | A | $Q_{basis}$ |
| [mm/min] | [min] | [cm³/min] | [min] | [Stück] | [cm³/min] |
| 2000 | 952 | 42 | 80 | 12 | 41 |
| 2250 | 847 | 47 | 70 | 12 | 46 |
| 2500 | 762 | 53 | 60 | 13 | 51 |
| 2750 | 693 | 58 | 50 | 14 | 56 |
| 3000 | 635 | 63 | 40 | 16 | 60 |
| 3250 | 586 | 68 | 35 | 17 | 65 |
| 3500 | 544 | 74 | 30 | 18 | 69 |
| 3750 | 508 | 79 | 25 | 20 | 73 |
| 4000 | 476 | 84 | 20 | 24 | 76 |
| 4250 | 448 | 89 | 18 | 25 | 80 |
| 4500 | 423 | 95 | 16 | 26 | 84 |
| 4750 | 401 | 100 | 14 | 29 | 87 |
| 5000 | 381 | 105 | 12 | 32 | 90 |
| 5250 | 363 | 110 | 10 | 36 | 92 |
| 5500 | 346 | 116 | 8 | 43 | 92 |
| 5750 | 331 | 121 | 6 | 55 | 91 |
| 6000 | 317 | 126 | 4 | 79 | 84 |
| 6250 | 305 | 131 | 3 | 102 | 79 |
| 6500 | 293 | 137 | 2 | 147 | 68 |
| 6750 | 282 | 142 | 1 | 282 | 47 |
| 7000 | 272 | 147 | 0,5 | 544 | 29 |
| 7250 | 263 | 152 | 0 | | |
| 7500 | 254 | 158 | 0 | | |
| 7750 | 246 | 163 | 0 | | |
| 8000 | 238 | 168 | 0 | | |

| Ein-griffs-tiefe | Bearbei-tungs-dauer | Zeitspan-volumen | Stand-zeit | Werkzeug-wechsel | Basiszeit-span-volumen |
|---|---|---|---|---|---|
| $a_p$ | d | Q | t | A | $Q_{basis}$ |
| [mm] | [min] | [cm³/min] | [min] | [Stück] | [cm³/min] |
| 0,5 | 667 | 60 | 40 | 17 | 57 |
| 0,55 | 606 | 66 | 35 | 17 | 62 |
| 0,6 | 556 | 72 | 30 | 19 | 68 |

| | | | | | |
|---|---|---|---|---|---|
| 0,65 | 513 | 78 | 25 | 21 | 72 |
| 0,7 | 476 | 84 | 20 | 24 | 76 |
| 0,75 | 444 | 90 | 18 | 25 | 81 |
| 0,8 | 417 | 96 | 17 | 25 | 86 |
| 0,85 | 392 | 102 | 16 | 25 | 91 |
| 0,9 | 370 | 108 | 15 | 25 | 95 |
| 0,95 | 351 | 114 | 14 | 25 | 100 |
| 1 | 333 | 120 | 13 | 26 | 104 |
| 1,05 | 317 | 126 | 12 | 26 | 108 |
| 1,1 | 303 | 132 | 11 | 28 | 112 |
| 1,15 | 290 | 138 | 10 | 29 | 115 |
| 1,2 | 278 | 144 | 10 | 28 | 120 |
| 1,25 | 267 | 150 | 10 | 27 | 125 |
| 1,3 | 256 | 156 | 10 | 26 | 130 |
| 1,35 | 247 | 162 | 9 | 27 | 133 |
| 1,4 | 238 | 168 | 9 | 26 | 137 |
| 1,45 | 230 | 174 | 8 | 29 | 139 |
| 1,5 | 222 | 180 | 7 | 32 | 140 |
| 1,55 | 215 | 186 | 6 | 36 | 140 |
| 1,6 | 208 | 192 | 5 | 42 | 137 |
| 1,65 | 202 | 198 | 4 | 51 | 132 |
| 1,7 | 196 | 204 | 3 | 65 | 122 |
| 1,75 | 190 | 210 | 2 | 95 | 105 |
| 1,8 | 185 | 216 | 1,2 | 154 | 81 |
| 1,85 | 180 | 222 | 0,8 | 225 | 63 |
| 1,9 | 175 | 228 | 0,4 | 439 | 38 |

| Ein-griffs-breite | Bearbei-tungs-dauer | Zeitspan-volumen | Stand-zeit | Werkzeug-wechsel | Basiszeit-span-volumen |
|---|---|---|---|---|---|
| $a_e$ | d | Q | t | A | $Q_{basis}$ |
| [mm] | [min] | [cm³/min] | [min] | [Stück] | [cm³/min] |
| 10 | 1429 | 28 | 30 | 48 | 26 |
| 12,5 | 1143 | 35 | 29 | 39 | 33 |
| 15 | 952 | 42 | 28 | 34 | 39 |
| 17,5 | 816 | 49 | 27 | 30 | 46 |
| 20 | 714 | 56 | 26 | 27 | 52 |
| 22,5 | 635 | 63 | 25 | 25 | 58 |
| 25 | 571 | 70 | 24 | 24 | 65 |
| 27,5 | 519 | 77 | 22 | 24 | 71 |
| 30 | 476 | 84 | 20 | 24 | 76 |
| 32,5 | 440 | 91 | 18 | 24 | 82 |
| 35 | 408 | 98 | 16 | 26 | 87 |
| 37,5 | 381 | 105 | 14 | 27 | 92 |
| 40 | 357 | 112 | 13 | 27 | 97 |

| 42,5 | 336 | 119 | 12 | 28 | 102 |
|---|---|---|---|---|---|
| 45 | 317 | 126 | 11 | 29 | 107 |
| 47,5 | 301 | 133 | 10 | 30 | 111 |
| 50 | 286 | 140 | 9 | 32 | 115 |
| 52,5 | 272 | 147 | 8 | 34 | 118 |
| 55 | 260 | 154 | 7 | 37 | 120 |
| 57,5 | 248 | 161 | 6 | 41 | 121 |
| 60 | 238 | 168 | 5 | 48 | 120 |
| 62,5 | 229 | 175 | 4 | 57 | 117 |
| 65 | 220 | 182 | 3 | 73 | 109 |

Die aus den Tabellen ersichtlichen Standzeiten können einerseits auf Angaben des Werkzeug-Herstellers beruhen, der für bestimmter Schneidbedingungen (Vorschubgeschwindigkeit Eingriffstiefe, Eingriffsbreite) und bestimmte Werkstoffe des Werkstücks diesbezügliche Angaben bereitstellt. In der Regel beruhen diese Werte jedoch auf an der Maschine mit einem konkreten Werkstück durchgeführten Tests.

Wie die Tabellen zeigen, können Veränderungen der Vorschubgeschwindigkeit, der Eingriffstiefe oder der Eingriffsbreite zu einer Erhöhung des Basiszeitspanvolumens führen. Sie können dieses jedoch auch erheblich verschlechtern.

Da insbesondere die Werkzeug-Standzeit von allen 3 genannten Parametern abhängt, ist es eine Herausforderung für den Maschinen-Bediener, diese Parameter so einzustellen, dass sich insgesamt ein Optimum für die Bearbeitung, also ein maximales Basiszeitspanvolumen ergibt.

Nachfolgend werden noch beispielhaft die Auswirkungen auf die Herstellungskosten eines Impellers in Abhängigkeit der gewählten Parameter-Einstellungen verdeutlicht. Dabei erfolgt die Bearbeitung in einem ersten Prozess P1 mit einem Basiszeitspanvolumen $Q_{basis}$ von 60 $cm^3$/min, einer Bearbeitungsdauer von 667 min und einer Anzahl von 17 benötigten Werkzeugen.

Ein optimierter zweiter Prozess P2 erfolgt mit einem Basiszeitspanvolumen $Q_{basis}$ von 100 $cm^3$/min, einer Bearbeitungsdauer von 400 min und einer Anzahl von 25 benötigten Werkzeugen.

| Prozess | Basiszeitspanvolumen | Bearbeitungsdauer | Anzahl Werkzeuge | Kosten Werkzeuge | Kostensatz Maschine | Anzahl Kammern | Kosten Impeller |
|---|---|---|---|---|---|---|---|
| | $Q_{basis}$ | d | A | | | | |
| | [cm3/min] | [min] | [Stück] | [€] | [€/Std] | [Stück] | [€] |
| P1: | 60 | 667 | 17 | 50 | 208 | 13 | 41.094 |
| P2: | 100 | 400 | 25 | 50 | 208 | 13 | 34.277 |

Wie der Tabelle zu entnehmen ist, ergibt sich bei dem optimierten Prozess P2 eine Kostenersparnis von 6.817,- Euro gegenüber dem ersten Prozess P1 pro Impeller.

Die Erfindung wird nachfolgend anhand von Ausführungsbeispielen näher erläutert. Dabei zeigen:

FIG 1 ein Werkzeugmaschinensystem mit einer numerisch gesteuerten Werkzeugmaschine,
FIG 2 eine erfindungsgemäße Anzeige an einem Display einer Bedienoberfläche,
FIG 3 Verfahrensschritte bei der Durchführung eines erfindungsgemäßen Verfahrens,
FIG 4 die Produktivität in Abhängigkeit von Technologieparametern,
FIG 5 einen bevorzugten Betriebsbereich der Werkzeugmaschine.

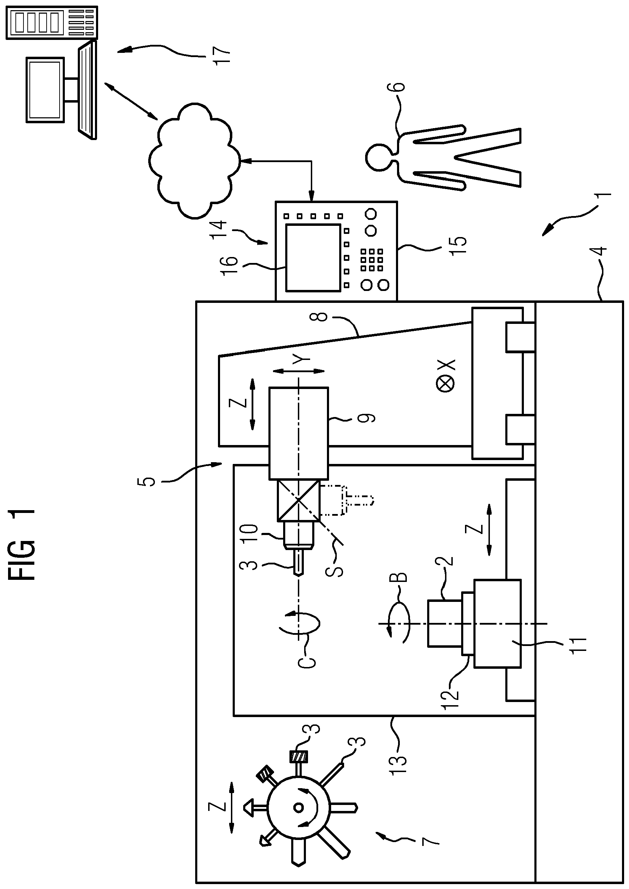

Figur 1 zeigt in schematischer Darstellung ein erfindungsgemäßes Werkzeugmaschinensystem in Form eines Bearbeitungszentrums 1 zur 5-achsigen Bearbeitung eines Werkstücks 2 durch wenigstens ein Werkzeug 3. Das Bearbeitungszentrum 1 umfasst eine Werkzeugmaschine 5, die auf einem Maschinengestell 4 befestigt ist. Die Werkzeugmaschine 5 umfasst einen längs der Achse X beweglichen Ständer 8 und einen darauf längs der Achsen Y und Z beweglich angebrachten Schlitten 9, welcher eine Spindel 10 trägt. Die Spindel 10 ist um die Achse C rotierend antreibbar und zur Aufnahme eines Werkzeugs 3 vorgesehen. Die Spindel 10 ist zudem um eine Achse S schwenkbar gelagert, wobei beim Schwenken die Spindelachse C eine Bewegung auf einem Kegelmantel beschreibt. Der Winkel zwischen der Spindelachse C und der Schwenkachse S beträgt 45°, woraus sich ein Kegelwinkel von 90° ergibt. Durch diese Anordnung kann die Spindel 10 zwischen einer horizontalen und einer vertikalen Extremstellung beliebige Neigungswinkel einnehmen.

Die Werkzeugmaschine 5 umfasst ferner einen längs der Achse Z beweglichen Schlitten 11, der einen um die Achse 3 rotierend antreibbaren Werkstücktisch 12 trägt und zur Aufnahme eines Werkstücks 2 mit entsprechenden Befestigungs- und Spannmitteln (nicht dargestellt) versehen ist.

Zur Steuerung des Bearbeitungszentrums 1 ist eine CNC-Steuerung 14 vorhanden. Die CNC-Steuerung 14 führt eine Steuerfunktion durch Abarbeitung eines Teileprogrammes in Echtzeit aus und steuert dadurch die Relativbewegung zwischen Werkzeug 3 und Werkstück 2 in Echtzeit. Hierbei werden von der Steuerung 14 laufend Eingangsdaten bzw. Eingangssignale ("Istwerte") der Werkzeugmaschine 5 erfasst und die CNC-Steuerung 14 erzeugt unter Einbeziehung dieser Istwerte Ausgangssignale in Form von Steuerbefehlen für die Antriebe (nicht dargestellt) der Werkzeugmaschine 5.

Die CNC-Steuerung 14 weist unter anderem als wesentliche Komponenten einen Echtzeitkern NCK (Numerical Control Kernel), eine PLC (Programmable Logic Control) sowie eine HMI-Einheit 15 (Human-Machine-Interface) mit einem Display 16 zur Bedienung des Bearbeitungszentrums 1 durch einen Bediener 6 auf.

Das Bearbeitungszentrum 1 ermöglicht die Durchführung von Bearbeitungsprozessen durch spanende Formgebung mit geometrisch bestimmter Schneide, wie zum Beispiel Fräsen, Drehen, Bohren, Gewindeschneiden, Drehfräsen, Honen usw., aber auch Bearbeitungsprozesse mit geometrisch unbestimmter Schneide, wie zum Beispiel Schleifen. Ferner können spanlose Fertigungsverfahren wie etwa Rollieren oder Gewindeformen durchgeführt werden. Die Erzeugung einer gewünschten Werkstückform erfolgt innerhalb des Arbeitsraums 13 der Werkzeugmaschine 5 durch eine Abfolge verschiedener Bearbeitungsprozesse, zu welcher Werkzeuge 3 mit dem Werkstück 2 relativ zueinander Längs programmierter Bahnen bewegt und miteinander in Eingriff gebracht werden. Die zur Ausführung der Bearbeitungsprozesse benötigten Werkzeuge 3 werden in einem Werkzeugmagazin 7 vorgehalten und entsprechend der Bearbeitungsabfolge nacheinander mittels einer Werkzeugwechseleinrichtung (nicht dargestellt) in die Spindel 10 eingewechselt.

Mit dem dargestellten Bearbeitungszentrum 1 lassen sich 5-Achs-Bearbeitungen durchführen, die beispielsweise beim Fräsen von Freiformflächen - etwa beim Fräsen von Turbinenschaufeln - erforderlich sind.

Die Steuerung 14 ist dazu ausgebildet, dass zunächst vorbestimmte, die Bearbeitung betreffende Technologieparameter durch manuelle Betätigung der Bedienoberfläche 15 durch den Benutzer 6 geändert werden können. Beispielsweise kann eine Vorschubgeschwindigkeit in einem in der Steuerung 14 hinterlegten Teileprogramm vorgegeben sein und durch Betätigung eines an der Bedienoberfläche vorhandenen Override-Reglers durch den Benutzer 6 verändert werden.

Erfindungsgemäß werden zunächst die Auswirkungen dieser Veränderung bestimmt und dem Benutzer in Form einer Änderung einer produktionswirtschaftlichen Kenngröße auf dem Display 16 der Steuerung 14 angezeigt.

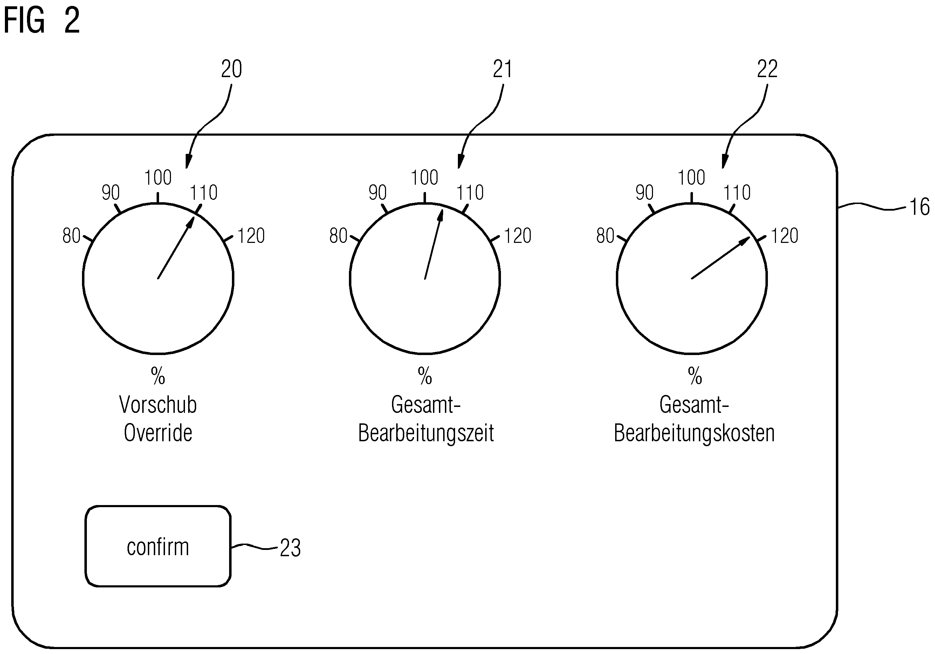

Figur 2 zeigt beispielhaft eine derartige Anzeige auf dem Display 16. Im Beispiel wurde die Vorschubgeschwindigkeit von normal 100% auf 120% erhöht (Schaubild 20). Aus der Anzeige ist ersichtlich, dass diese Veränderung der Vorschubgeschwindigkeit eine Erhöhung der Gesamt-Bearbeitungszeit auf ca. 106% (Schaubild 21) und der Gesamt-Bearbeitungskosten auf ca. 119% (Schaubild 22) bewirken würde. Diese zunächst so nicht erwarteten Auswirkungen lassen sich beispielsweise dadurch erklären, dass bei der vorgesehenen Bearbeitung durch die Erhöhung der Vorschubgeschwindigkeit die verwendeten Werkzeuge schneller verschleißen, was wiederum einen höheren Verbrauch an Werkzeugen und mehr und häufigere Werkzeugwechsel bedingt.

Besonders vorteilhaft ist es, wenn sich die manuelle Veränderung eines Technologieparameters, im Beispiel die Vorschubgeschwindigkeit, nicht sofort auf die aktuell durchgeführte Bearbeitung auswirkt, sondern für die Durchführung der Steuerfunktion zunächst der ursprüngliche Wert des Technologieparameters beibehalten wird und die durch die Veränderung bedingte Änderung der produktionswirtschaftlichen Kenngröße lediglich in einer Simulation bestimmt wird. Der Bediener hat so die Möglichkeit, diese Rückmeldung in seine Überlegungen mit einfließen zu lassen und die Veränderung ggf. nicht oder anders durchzuführen, bevor sich überhaupt bezüglich der Bearbeitung des Werkstücks etwas ändert. So lässt sich beispielsweise verhindern, dass der Benutzer durch seinen manuellen Eingriff unbeabsichtigt die Produktivität der Maschine herabsetzt. Damit sich die durchgeführte manuelle Parameter-Veränderung auch tatsächlich auf die reale Bearbeitung auswirkt, muss bei diesem Ausführungsbeispiel zunächst der aus Figur 2 ersichtliche Button 23 "confirm" zur Bestätigung der Veränderung betätigt werden, z.B. durch Berührung des Button 23 auf dem als Touch Display ausgeführten Display 16.

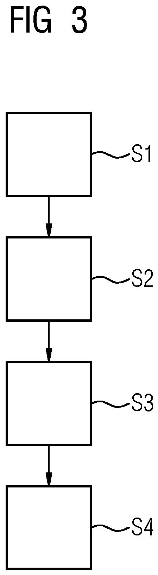

Figur 3 veranschaulicht ein Ausführungsbeispiel zur Durchführung eines erfindungsgemäßen Verfahrens. Dabei wird in einem ersten Verfahrensschritt S1 durch Interaktion eines Bedieners mit der Steuervorrichtung ein bestimmter Technologieparameter durch den Bediener manuell verändert.

In einem zweiten Verfahrensschritt S2 wird ein Maß für eine durch die in Schritt S1 durchgeführte Veränderung hervorgerufene Änderung einer produktionswirtschaftlichen Kenngröße bestimmt und auf dem Display der Steuerung angezeigt.

In einem Schritt S3 erfolgt eine weitere manuelle Eingabe des Benutzers zur Bestätigung der in Schritt S1 vorgenommenen Veränderung des Technologieparameters.

In einem Schritt S4 wird der veränderte Technologieparameter in der Steuervorrichtung bei der Erzeugung der Relativbewegung zwischen dem Werkstück und dem Werkzeug berücksichtigt.

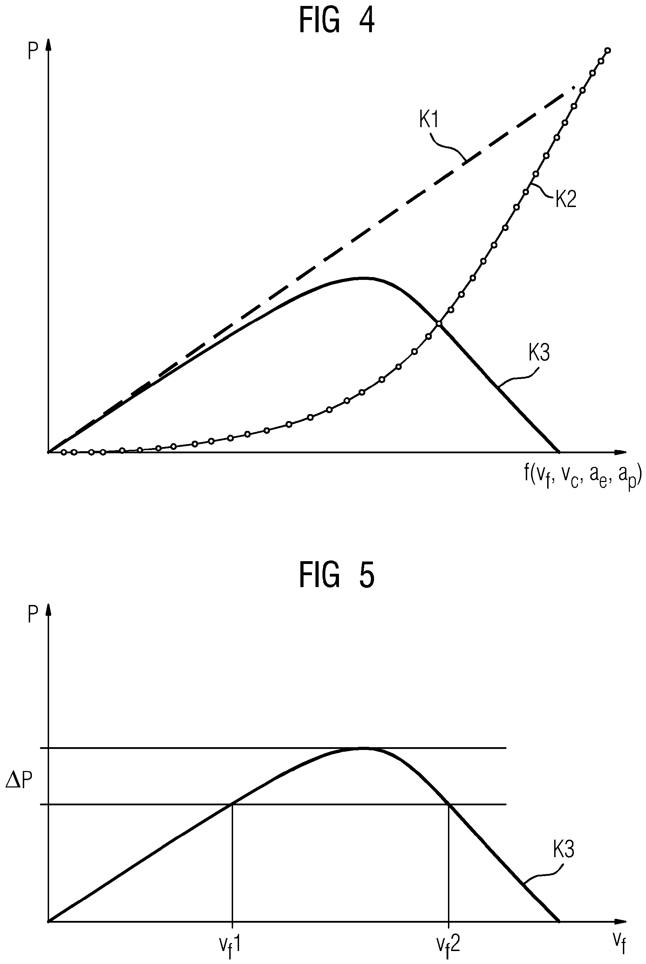

Figur 4 veranschaulicht den Zusammenhang zwischen produktionswirtschaftlichen Kenngrößen wie etwa der Produktivität und einigen von einem Bediener an der Werkzeugmaschine veränderbaren Technologieparametern (Vorschubgeschwindigkeit $v_f$, Schnittgeschwindigkeit $v_c$, Eingriffstiefe $a_p$ oder Eingriffsbreite $a_e$). Die Kurve K1 (strichlierte Linie), in diesem Fall eine Gerade, veranschaulicht das Zerspanvolumen für den unrealistischen Anwendungsfall, dass keine Werkzeugwechsel erforderlich sind. Das Zerspanvolumen steigt hier z.B. linear mit der Vorschubgeschwindigkeit.

In der Kurve K2 (gepunktet) ist die bei einer bestimmten, realen Bearbeitung erforderliche Anzahl an Werkzeugwechseln dargestellt. Verschleißbedingt werden mit zunehmendem Zerspanvolumen des in Eingriff befindlichen Werkzeuges überproportional viele Werkzeuge benötigt.

Die Kurve K3 veranschaulicht die Produktivität unter Berücksichtigung der verschleißbedingten Werkzeugwechsel. Daraus ist ersichtlich, dass die Produktivität mit zunehmendem Zerspanvolumen (pro Zeiteinheit) zunächst bis zu einem Optimum ansteigt und nach diesem Optimum wieder abfällt.

Figur 5 veranschaulicht beispielhaft einen bevorzugten Bereich bezüglich der Vorschubgeschwindigkeit $v_f$, die vorzugsweise im Bereich zwischen den Werten $v_r1$ und $v_r2$ liegt und damit so bestimmt ist, dass die Produktivität P maximal um einen vorbestimmten Wert $\Delta P$ von ihrem Maximum abweicht. Vorzugsweise erhält der Bediener an der Maschine einen zusätzlichen Warnhinweis, wenn sich die Maschine in einem Betriebspunkt außerhalb des so definierten, bevorzugten Betriebsbereiches befindet.

Auf Basis der hier vorgeschlagenen Vorgehensweise erhält der den Prozess bestimmende Mitarbeiter prozessrelevante betriebswirtschaftliche Daten, die ihn bei seiner Entscheidungsfindung unterstützen. Die nichtlinearen Abhängigkeiten sind zwar nach wie vor im Prozess vorhanden, jedoch werden dem Mitarbeiter beispielsweise in der Vergangenheit getätigten Entscheidungen hinsichtlich der Wirkungsweise klar gespiegelt, so dass er die anstehenden Entscheidungen besser treffen kann.

Die Erfindung führt zu einer inkrementellen Verbesserung der Prozesse und hat in der Aufsummierung ein erhebliches Potential an Einsparungen, der Steigerung der Effektivität und der Optimierung der Kostensituation.

Es ist auf Basis einer solchen Online Prozessbewertung sogar möglich, die Prozesse optimal auf die derzeitige Auslastungssituation einzustellen, so z.B. durch Vorgabe eines Richtwertes bzw. einer abstrakten Zielgröße (Bsp. TCO / Basiszeitspanvolumen).

## Patentansprüche

1. Verfahren zum Betrieb eines Werkzeugmaschinensystems (1), umfassend eine Werkzeugmaschine (5) zur Bearbeitung wenigstens eines Werkstücks (2) mittels wenigstens eines Werkzeugs (3) und eine mit der Werkzeugmaschine (5) verbundene Steuervorrichtung (14) zum Erzeugen einer Relativbewegung zwischen dem Werkstück (2) und dem Werkzeug (3) anhand eines von der Steuervorrichtung (14) abarbeitbaren Programms, wobei die Steuervorrichtung (14) eine Bedieneinrichtung (15) mit einer Anzeigevorrichtung (16) zur Interaktion eines Bedieners (6) mit der Steuervorrichtung (14) umfasst, und dass mittels der Bedieneinrichtung (15) wenigstens ein Technologieparameter durch den Bediener (6) manuell verändert wird und infolge dessen ein Maß für eine durch die Veränderung hervorgerufene Änderung einer produktionswirtschaftlichen Kenngröße bestimmt **dadurch gekennzeichnet, dass** die Kenngröße direkt und/oder in Relation zu einem diesbezüglichen Relativmaß an der Anzeigevorrichtung (16) angezeigt wird, wobei die Änderung der produktionswirtschaftlichen Kenngröße durch die Steuervorrichtung (14) und/oder eine mit der Steuervorrichtung (14) verbindbare, externe Recheneinrichtung (17) ermittelt wird und wobei in der Steuervorrichtung (14) und/oder der externen Recheneinrichtung (17) eine für den Werkzeugwechsel vorgesehene Werkzeugwechselzeit und/oder für die Beschaffung eines Werkzeugs (3) benötigte Werkzeugkosten und/oder ein für den Betrieb der Werkzeugmaschine (5) bestimmter Maschinenstundensatz hinterlegt sind und wobei das Maß für die Änderung der produktionswirtschaftlichen Kenngröße in Abhängigkeit der Werkzeugwechselzeit und/oder der Werkzeugkosten und/oder des Maschinenstundensatzes ermittelt wird wobei der Bediener diese Änderung anschließend bestätigen kann.

**2.** Verfahren nach Anspruch 1, wobei zur Bearbeitung des Werkstücks (2) oder eines Los des Werkstücks (2) eine Anzahl gleicher Werkzeuge (3) benötigt wird, wobei die Werkzeuge (3) aufeinanderfolgend mittels einer Werkzeugwechselvorrichtung (7) in eine Werkzeugaufnahme (10) der Werkzeugmaschine (5) eingewechselt werden, wobei sich in Folge der manuellen Veränderung des Technologieparameters die Anzahl benötigter, gleicher Werkzeuge (3) ändert und wobei die Änderung der produktionswirtschaftlichen Kenngröße in Abhängigkeit der jeweils benötigten Anzahl an Werkzeugen (3) und der damit verbundenen Anzahl an Werkzeugwechseln bestimmt wird.

**3.** Verfahren nach einem der Ansprüche 1 oder 2, wobei, nachdem das Maß für die Änderung der produktionswirtschaftlichen Kenngröße an der Anzeigevorrichtung (16) angezeigt wird, zunächst eine weitere manuelle Interaktion des Benutzers (6) mit der Bedieneinrichtung (15) erforderlich wird, bevor die Bearbeitung des Werkstücks (2) an den veränderten Technologieparameter angepasst wird.

**4.** Verfahren nach einem der vorherigen Ansprüche, wobei die Werkzeugwechselzeit und/oder die Werkzeugkosten und/oder der Maschinenstundensatz durch Interaktion des Benutzers (6) mit der Steuervorrichtung (14) und/oder der externen Recheneinrichtung (17) einstellbar ist.

**5.** Verfahren nach einem der vorherigen Ansprüche, wobei die Werkzeugwechselzeit während des realen Betriebs der Werkzeugmaschine (5) gemessen und vorzugsweise fortlaufend aktualisiert wird.

**6.** Verfahren nach einem der vorherigen Ansprüche, wobei das Maß für die Änderung der produktionswirtschaftlichen Kenngröße in Abhängigkeit von während des Betriebs der Werkzeugmaschine (5) erzeugten Messwerten ermittelt wird.

**7.** Verfahren nach einem der vorherigen Ansprüche, wobei durch den Benutzer (6) eine Vorschubgeschwindigkeit und/oder eine Spindeldrehzahl manuell verändert wird bzw. werden.

**8.** Verfahren nach einem der vorherigen Ansprüche, wobei das Maß für die Änderung der produktionswirtschaftlichen Kenngröße als Absolutwert angezeigt wird.

**9.** Verfahren nach einem der vorherigen Ansprüche, wobei das Maß für die Änderung der produktionswirtschaftlichen Kenngröße relativ zu einem Optimum der betreffenden produktionswirtschaftlichen Kenngröße angezeigt wird.

**10.** Verfahren nach einem der vorherigen Ansprüche, wobei es sich bei der produktionswirtschaftlichen Kenngröße um die zur Bearbeitung erforderliche Bearbeitungszeit oder die durch die Bearbeitung verursachten Bearbeitungskosten handelt.

**11.** Werkzeugmaschinensystem (1), umfassend eine Werkzeugmaschine (5) und eine Steuervorrichtung (14) zur Durchführung eines Verfahrens nach einem der Ansprüche 1 bis 10.

**12.** Werkzeugmaschinensystem (1), nach Anspruch 11, umfassend eine externe Recheneinrichtung (17) um das Maß für die zur Bearbeitung erforderliche Bearbeitungszeit und/oder das Maß für die durch die Bearbeitung verursachten Bearbeitungskosten zu ermitteln.

**13.** Steuervorrichtung (14) für ein Werkzeugmaschinensystem (1) nach Anspruch 11 oder 12 zur Durchführung eines Verfahrens nach einem der Ansprüche 1 bis 10.

## Claims

1. Method for operating a machine tool system (1), comprising a machine tool (5) for machining at least one workpiece (2) by means of at least one tool (3) and a control apparatus (14) connected to the machine tool (5) for generating a relative movement between the workpiece (2) and the tool (3) using a program which can be executed by the control apparatus (14), wherein the control apparatus (14) comprises an operating facility (15) with a display apparatus (16) for interaction between an operator (6) and the control apparatus (14), and by means of the operating facility (15) at least one technology parameter is altered manually by the operator (6) and as a result a measure for a change to a production-related characteristic variable brought about by the change is determined, **characterised in that** the characteristic variable is displayed on the display apparatus (16) directly and/or in relation to an associated relative measure, wherein the change to the production-related characteristic variable by the control apparatus (14) and/or an external computing facility (17) which can be connected to the control apparatus (14) is determined and wherein a tool change time provided for the tool change and/or tool costs required for the procurement of a tool (3) and/or a machine hour rate intended for the operation of the machine tool (5) are stored in the control apparatus (14) and/or the external computing facility (17) and wherein the measure for the change to the production-related characteristic variable is determined as a function of the tool change time and/or the tool costs and/or the machine hour rate, wherein the operator can subsequently confirm this change.

2. Method according to claim 1, wherein for machining the workpiece (2) or a batch of the workpiece (2), a number of identical tools (3) is required, wherein the tools (3) are successively inserted into a tool holder (10) of the machine tool (5) by means of a tool changing apparatus (7), wherein as a result of the manual alteration of the technology parameter the number of identical tools (3) required changes and wherein the change in the production-related characteristic variable is determined as a function of the number of tools (3) required in each case and the number of tool changes associated therewith.

3. Method according to one of claims 1 or 2, wherein, after the measure for the change to the production-related characteristic variable is displayed on the display apparatus (16), a further manual interaction of the user (6) with the operating facility (15) is first required before the machining of the workpiece (2) is adapted to the altered technology parameters.

4. Method according to one of the preceding claims, wherein the tool change time and/or the tool costs and/or the machine hour rate can be adjusted by interaction between the user (6) and the control apparatus (14) and/or the external computing facility (17).

5. Method according to one of the preceding claims, wherein the tool change time is measured and preferably continuously updated during the actual operation of the machine tool (5).

6. Method according to one of the preceding claims, wherein the measure for a change to the production-related characteristic variable is determined as a function of measured values generated during the operation of the machine tool (5).

7. Method according to one of the preceding claims, wherein a feed rate and/or a spindle speed is or are changed manually by the user (6).

8. Method according to one of the preceding claims, wherein the measure for a change to the production-related characteristic variable is displayed as an absolute value.

9. Method according to one of the preceding claims, wherein the measure for a change to the production-related characteristic variable relative to an optimum of the relevant production-related characteristic variable is displayed.

10. Method according to one of the preceding claims, wherein the production-related characteristic variable is the machining time necessary for machining or the machining costs arising from machining.

11. Machine tool system (1), comprising a machine tool (5) and a control apparatus (14) for performing a method according to one of claims 1 to 10.

12. Machine tool system (1), according to claim 11, comprising an external computing facility (17) for determining the measure for the machining time required for machining and/or the measure for the machining costs arising from machining.

13. Control apparatus (14) for a machine tool system (1) according to claim 11 or 12 for performing a method according to one of claims 1 to 10.

**Revendications**

1. Procédé pour faire fonctionner un système (1) de machine-outil, comprenant une machine-outil (5) pour l'usinage d'au moins une pièce (2) au moyen d'au moins un outil (3) et un dispositif (14) de commande relié à la machine-outil (5) pour la production d'un mouvement relatif entre la pièce (2) et l'outil (3), à l'aide d'un programme pouvant être élaboré par le dispositif (14) de commande, dans lequel le dispositif (14) de commande comprend un dispositif (15) de service ayant un dispositif (16) d'affichage pour l'interaction d'un opérateur (6) avec le dispositif (14) de commande, et
en ce que, au moyen du dispositif (15) de service, au moins un paramètre technologique est modifié manuellement par l'opérateur (6) et, à la suite de cela, détermine une mesure d'une variation, provoquée par la modification, d'une grandeur caractéristique économique de production, **caractérisé en ce que** l'on affiche la grandeur caractéristique directement et/ou en relation avec une mesure relative la concernant sur le dispositif (16) d'affichage, dans lequel on détermine la variation de la grandeur caractéristique économique de production par le dispositif (14) de commande et/ou par un dispositif (17) informatique extérieur pouvant être relié au dispositif (14) de commande et dans lequel, dans le dispositif (14) et/ou dans le dispositif (17) informatique extérieur est mis en mémoire un temps de changement d'outil prévu pour le changement d'outil et/ou des coûts d'outils nécessités pour l'achat d'un outil (3) et/ou un taux horaire machine déterminé pour le fonctionnement de la machine-outil (5) et dans lequel on détermine la mesure de la variation de la grandeur caractéristique économique de production en fonction du temps de changement d'outil et/ou des coûts d'outils et/ou du taux horaire machine, dans lequel l'opérateur peut confirmer ensuite cette variation.

2. Procédé suivant la revendication 1, dans lequel on a besoin, pour l'usinage de la pièce (2) ou d'un lot de la pièce (2), d'un nombre de même outils (3), dans lequel on loge les outils (3) successivement au moyen d'un dispositif (7) de changement d'outil dans un logement (10) d'outils de la machine-outil (5), dans lequel, à la suite de la modification manuelle du paramètre technologique, le nombre de même outils (3) nécessaires se modifie, et dans lequel on détermine la variation de la grandeur caractéristique économique de production, en fonction du nombre respectivement nécessaire d'outils (3) et du nombre qui l'accompagne de changements d'outils.

3. Procédé suivant l'une des revendications 1 ou 2, dans lequel, après avoir affiché la mesure de la variation de la grandeur caractéristique économique de production sur le dispositif (16) d'affichage, tout d'abord une autre interaction manuelle de l'opérateur (6) avec le dispositif (15) de service est nécessaire, avant d'adapter l'usinage de la pièce (2) aux paramètres technologiques modifiés.

4. Procédé suivant l'une des revendications précédentes, dans lequel le temps de changement d'outil et/ou les coûts d'outils et/ou le taux horaire machine est réglable par interaction de l'opérateur (6) avec le dispositif (14) de commande et/ou avec le dispositif (17) informatique extérieur.

5. Procédé suivant l'une des revendications précédentes, dans lequel on mesure et, de préférence, on met à jour en continu le temps de changement d'outil pendant le fonctionnement réel de la machine-outil (5).

6. Procédé suivant l'une des revendications précédentes, dans lequel on détermine la mesure de la variation de la grandeur caractéristique économique de production en fonction de valeurs de mesure produites pendant le fonctionnement de la machine-outil (5) .

7. Procédé suivant l'une des revendications précédentes, dans lequel on modifie manuellement par l'opérateur (6) une vitesse d'avance et/ou une vitesse de rotation d'une broche.

8. Procédé suivant l'une des revendications précédentes, dans lequel on affiche la mesure de la variation de la grandeur caractéristique économique de production sous la forme d'une valeur absolue.

9. Procédé suivant l'une des revendications précédentes, dans lequel on affiche la mesure de la variation de la grandeur caractéristique économique de production par rapport à un optimum de la grandeur caractéristique économique de production concernée.

**10.** Procédé suivant l'une des revendications précédentes, dans lequel la grandeur caractéristique économique de production est le temps d'usinage nécessaire pour l'usinage ou les coûts d'usinage provoqués par l'usinage.

**11.** Système (1) de machine-outil, comprenant une machine-outil (5) et un dispositif (14) de commande pour effectuer un procédé suivant l'une des revendications 1 à 10.

**12.** Système (1) de machine-outil suivant la revendication 11, comprenant un dispositif (17) informatique extérieur pour déterminer la mesure du temps d'usinage nécessaire à l'usinage et/ou la mesure des coûts d'usinage provoqués par l'usinage.

**13.** Dispositif (14) de commande d'un système (1) de machine-outil suivant la revendication 11 ou 12 pour effectuer un procédé suivant l'une des revendications 1 à 10.

FIG 1
17
6
1
14
16
15
4
8
Y
Z
X
9
5
10
3
S
Z
2
B
C
11
12
13
3
3
Z
7

FIG 2
20
21
22
16
90
100
110
80
120
90
100
110
80
120
90
100
110
80
120
%
Vorschub
Override
%
Gesamt-
Bearbeitungszeit
%
Gesamt-
Bearbeitungskosten
confirm
23

FIG 3

S1
S2
S3
S4

FIG 4

P
K1
K2
K3
f(vf, vc, ae, ap)

FIG 5

P
ΔP
K3
vf1
vf2
vf

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2017212488 A1
- DE 102009023648 A1
- US 2019018391 A1
- DE 102006006273 A1

### In der Beschreibung aufgeführte Nicht-Patentliteratur

- **MIKE LYNCH.** *Monitoring Important Control Panel Functions,* 17. Januar 2011, 1-1
- An object-oriented architecture for sensorless cutting force feedback for CNC milling process monitoring and control. **LOENZO RAG et al.** ADVANCES IN ENGINEERING SOFTWARE. ELSEVIER SCIENCE, vol. 41, 754-761